# EUROPEAN PATENT SPECIFICATION

(11) **EP 1 760 189 B1**
(45) Date of publication and mention of the grant of the patent: **24.04.2013**
(21) Application number: 06016171.8
(22) Date of filing: 03.08.2006
(51) Int. Cl.: D06N 3/00, B32B 5/28, D04H 13/00

(54) **Multilayer intermediate product for the preparation of artificial leather having a suede-like appearence and preparation method thereof**
Mehrschichtzwischenprodukt für die Herstellung von wildlederartigem Kunsleder und Herstellungsverfahren
Produit intermédiaire multicouche pour la préparation de cuir synthétique ayant un aspect suédé et son procédé de fabrication

(30) Priority: 31.08.2005 IT MI20051616
(43) Date of publication of application: 07.03.2007
(73) Proprietor: ALCANTARA S.p.A., 20138 Milano (IT)
(72) Inventor: Teofrasti, Omar, Frazione Sismano 05020 Avigliano Umbro (IT); Ammirati, Carmine Carlo, 05100 Terni (IT); Spila, Eraldo, 00038 Valmontone (Roma) (IT)
(74) Representative: Biggi, Cristina

(56) References cited:
- EP-A1- 1 031 656
- EP-A2- 1 371 774
- US-A1- 2004 191 412
- DATABASE WPI Week 198433 Thomson Scientific, London, GB; AN 1984-204075 XP002635662, & JP 59 116477 A (TORAY IND INC) 5 July 1984 (1984-07-05)

## Description

The present invention relates to a multilayer intermediate product impregnated with polyurethane useful for the preparation of high quality artificial leather, with a suede-like appearance, soft, highly formable and characterized by an enhanced mechanical resistance.

The present invention also refers to the process for obtaining the above-mentioned multilayer intermediate product and the final suede-like leather deriving from said intermediate product.

Typical uses of said artificial leather are the covering of padded furniture and car interiors and seats.

Synthetic artificial leathers having a suede-like appearance are known in the art, they are characterized by a surface with a high density of microfibre and a matrix capable of binding this microfibre structure.

The microfibres forming the materials of this type are normally polyester- and/or polyamide-based and the binding matrix is of the polyurethane type.

The binder used, in addition to holding the microfibres forming the non-woven fabric, normally contributes to conferring higher mechanical properties and tear resistance of the composite structure. At the same time, however, it depresses the characteristics of softness and formability. For this reason, the amount of binder normally used in high quality artificial leather, is included within a range which prevents the above characteristics from being excessively depressed.

The methods used by the Applicant for producing high quality artificial leather with a suede-like appearance (see EP-A0584511, US-A-3531368 and US-A-3716614), can refer to a process schematised as follows:
1. Spinning of a bi-component fibre of the "sea-island" type, in which the "island" consists of polyester and/or polyamide and the "sea" consists of a polymer immiscible with the island component and capable of dissolving in suitable solvents of the organic or inorganic type. The microfibres obtained after the dissolution of the sea component typically have counts lower than 0.56 dtex (0.5 den).
2. Preparation of a felt characterized by a well-defined density and unit weight values, by means of a mechanical needling process capable of interfacing the microfibres obtained in item 1, with each other.
3. Impregnation of a felt with a binder capable of holding the "islands" during the subsequent elimination phase of the "sea" component. This binder, which also has the function of adequately reinforcing the felt so as to allow immersion in the solvent used for eliminating the "sea", can be of two different types.
   The first is typically based on polyvinyl alcohol, destined to be removed in a subsequent phase of the process.
   The second is typically based on a polyurethane which, even after the subsequent phases of the process, remains partially or totally in the final compound.
   The intermediate product obtained in this phase is called "SR".
4. Dissolution of the "sea" component in a suitable organic solvent (normally trichloro ethylene) or inorganic (acid, basic aqueous solution or simply hot water) to give microfibrous material. (Intermediate product called "D").
5. Impregnation of the above microfibrous material with a solution of polyurethane (PU) in organic solvents (dimethyl formamide, DMF); as an alternative, this impregnation can be effected with polyurethane in emulsion or aqueous dispersion.
6. Elimination of the binder used in point 3 (if it is not PU). (Intermediate product called "IE").
7. Division into two equal parts of the bi-component laminate ("island" component + PU) by a longitudinal cut parallel to the surfaces.
8. Grinding of the surfaces by means of suitable treatment with abrasive paper, to give the structure the characteristic suede-like appearance.
9. Final dyeing of the product.

One of the expedients often used for widening the application range of artificial suede-like leather is to combine the same with various kinds of supports capable of making the material compatible with applications requiring an higher mechanical resistance and/or different characteristics of formability, body, etc..

The simplest and most widely-used method for combining the microfibrous substrates with the different supports is to couple them with textile supports, by using suitable adhesives, after the dyeing process. The reason why dyeing normally precedes coupling with various supports is that it is difficult to find adhesives which can resist the severe process conditions used for dyeing artificial leather of the suede-like type and which, at the same time, allow a sufficient softness of the product to be preserved.

A consequence of this limitation is the impossibility of obtaining a final product having both sides dyed in the same dyeing process, thus characterized by a more or less pronounced similarity in the appearance of the two surfaces.

These differences are also due to the common use, as supports, of materials having a significantly different structure from that of the suede-like surface. Usually, in fact, in order to give the product the physico-mechanical characteristics necessary for the different applications, the supports are various types of textile structures having a visual appearance which is extremely different from that of the microfibrous surface with a non-woven structure.

Another method used for efficaciously combining the microfibrous substrates with the different supports used, which allows the above critical point to be overcome, is to "bind" the various layers in an operating phase which is "upstream" of the dyeing process, without making use of the cited adhesives. A particular technology of this type is disclosed in US patents US-A-4,368,227 and US-A-5,112,421. Both patents envisage the use of "multilayer" structures consisting of a combination of a microfibrous non-woven fabric with a traditional fabric or knitted fabric.

In these patents, the linkage between the various layers of the composite product is guaranteed by an interlacing of the fibers which form the same layers, obtained by means of suitable needling technologies.

The limits of the solution proposed by US-A-4,368,227 are mainly due to the necessity of using large quantities of polyurethane binder, as a result of the use very short fibres (≤ 10 mm) which are interlaced by means of water needling. Water needling, in fact, does not guarantee an interlacing degree which is such as to allow the use of small amounts of polyurethane binder in the subsequent impregnation phase.

With the proposed solution, on the other hand, it is not possible to resort to mechanical needling (which would be capable of ensuring an higher interlacing between the microfibres and between the layers) as this would cause an excessive structural weakening due to the breakage of the fibres forming the various layers of the composite material.

A limit of the patent US-A-5,112,421, which uses longer fibres (>20mm) and therefore requires smaller amounts of binder for retaining the same, consists in the necessity of using highly twisted yarns for producing fabrics representing the reinforced layer. This is because the solution proposed envisages the overlapping of the single layers, microfibrous and not, and the effecting of subsequent needling operations which lead to the production of an intermediate product characterized by suitable values of thickness and density.

The resort to highly twisted yarns has the purpose of preserving these compounds from an excessive structural weakening but, on the other hand, it has repercussions on the visual appearance of the finished product. The necessary high needling density, in fact, is such as to convey a significant number of "bundles" of fibres having conventional deniers towards the microporous surface (i.e. the "visible" surface of the final product), which invalidate the typical homogeneous appearance of high-quality suede-like artificial leather.

If textile structures could be used with no twisted yarns, the above conveyance phenomena would be limited to single fibres, and the visual and tactile impact would certainly be lower that that due to the presence of said bundles.

### DESCRIPTION OF THE INVENTION

The Applicant has now found a process which allows the production of a high quality synthetic leather with a suede-like appearance characterized by enhanced mechanical resistance, soft, formable, but without the critical aspects and limitations described above.

The new process is characterized by the combination of the layers forming the composite in an upstream phase of the dyeing process, this combination being effected with an alternative method to the interlacing system of fibres by means of needling, already described.

Using this method, which includes the preparation of a multilayer intermediate product impregnated with polyurethane, the Applicant has also produced an artificial leather having a visual appearance and tactile characteristics of the reverse side (that not "visible" in the final application of the product) similar to those of the visible side.

In accordance with this, the present invention relates to a process for the preparation of a multilayer intermediate product impregnated with polyurethane, useful for the production of a soft synthetic layer with enhanced mechanical resistance, comprising:
a. production of a microfibrous non-woven intermediate product consisting of microfibres of one or more polymers selected from polyethylene terephthalate, polytrimethylene terephthalate, polybutylene terephthalate, polyacrylonitrile, polyamide;
b. preparation, by coupling effected by means of adhesives, of an intermediate multilayer product comprising at least one layer of the above-mentioned non-woven microfibrous intermediate product and at least one layer of a reinforcing textile product;
characterised in that:
c) said reinforcing textile product is an orthogonal woven or knitted textile made of synthetic, artificial and or/natural fibres, and the multilayer intermediate product produced In step (b) is impregnated with one or more polyurethane solutions, thus obtaining a multilayer intermediate product impregnated with polyurethane.

As far as the non-woven microfibrous intermediate product is concerned, this preferably consists of polyethylene terephthalate.

The non-woven microfibrous intermediate product can be prepared according to methods described in the prior art.

According to a preferred embodiment, said non-woven microfibrous intermediate product can be prepared according to this scheme:
A) Spinning of a bicomponent fibre, at least one of the components being microfibrous.
B) Preparation of a semifinished felt by a mechanical or water needling process, preferably mechanical. The intermediate felt normally has density values included within the range of 0.150-0.220 g/cm³ and Unit Weights within the range of 550-650 g/m².
   Fibres of conventional counts (natural, artificial or synthetic) can be used in the production of felt, alone or mixed with the fibres obtained in item A.
C) Impregnation of the felt according to what is explained in point 3 of the production method of the already known microfibrous non-woven fabrics (intermediate product called "SR").
D) Dissolution of the "sea" component of the bicomponent fibres according to point 4 of the production method of the already known microfibrous non-woven fabrics (intermediate product called "D").

Before step (b), the above-mentioned non-woven microfibrous intermediate product (D) is subjected to longitudinal cutting parallel to the surfaces (intermediate product called "split D").

As far as the adhesives used in the coupling step (b) are concerned, these are preferably thermoplastic adhesives, which can be in the form of granules, powder, veil, network, continuous sheet and engraved sheet. A non-limiting example of the coupling conditions consists in the use of an adhesive in laminar form with a veil or network structure, which is hot laminated between the components to be coupled. In the preferred embodiment, the mentioned thermoplastic adhesives have a melting temperature ranging from 60°C to 150°C, preferably from 80°C to 120°C.

According to a second embodiment, an adhesive in granular form can be used, which is melted and spread by means of a cylinder engraved on at least one of the surfaces to be coupled; this operation is followed by the calendering of the multilayer intermediate product. This is an example of the *hot melt* technology.

It is also possible to use in step (b) technologies based on adhesives which polymerise after application, or on solvent adhesives.

As far as the reinforcing textile product of step (b) is concerned, this is a fabric, orthogonal or knitted, or non-woven, made of synthetic and/or artificial and/or natural fibres.

The reinforcing material is selected according to the final use of the suede-like leather or the preparation method used. For example, if the suede-like leather must guarantee certain mechanical properties, the reinforcing structure is selected from those capable of conferring the desired characteristics to the suede-like leather. Furthermore, if the preparation method comprises the longitudinal cutting of the reinforcing structure during one of the operating steps, the above structure is selected from three-dimensional structures, capable of tolerating said longitudinal cutting, so as to produce two layers having a structure still capable of guaranteeing a sufficient mechanical resistance.

Step (b) can be effected by combining only one of the laminates "D" with the laminated or knitted fabric, thus providing a structure with 2 layers only. According to another embodiment, it is possible to combine 2 laminates "D" with 2 or more textile laminates. In this case the external surfaces are, in any case, formed by the intermediate products "D".

It should be pointed out that the delamination resistance guaranteed by the adhesive in step (b) must not necessarily be of the definitive type. The adhesive, in fact, has the only purpose of exerting an adequate adhesive action until the subsequent impregnation in step (c) with the binding polyurethane matrix; this polyurethane binder will, in fact, create the definitive cohesion between the various layers.

Step (c) of the process of the present invention consists in impregnating, with one or more polyurethane solutions, the multilayer intermediate product prepared in step (b).

The term polyurethane means polymers consisting of flexible segments (soft segments) and rigid segments (hard segments).

The flexible segments can be polymeric portions based on:
- polyethers, for example derivatives of polytetramethyleneglycol diol (PTMG), polyethyleneglycol diol (PEG), polypropyleneglycol diol (PPG);
- polyethers, such as, for example, esters of adipic acid such as polyhexamethylene adipate diol (PHA), poly(3-methyl pentamethylene) adipate diol (PMPA) or polyneopentyladipate diol (PNA); other polyesters can be produced by the opening of cyclic molecules such as caprolactone (thus obtaining polycaprolactone diol, in short PCL);
- polycarbonates, such as, for example, polyhexamethyl carbonate diol (PHC), polypentamethylene carbonate diol (PPMC), poly-(3-methyl-pentamethylene carbonate) diol (PMPC), polytetramethylene carbonate diol (PTMC) and mixtures and co-polymers thereof.

The polyesters formed by the co-polymerization of polyethers and polyesters mentioned above, can also be used as flexible elements, as well as polyesters-co-polycarbonates obtained by the co-polymerization of polyesters and polycarbonates.

The polyols used for the synthesis of the polyurethanes of the examples normally have a number average molecular weight ranging from 1,000 to 3,000, preferably between 1,750 and 2,250.

The rigid segments refer to portions of the polymeric chains formed by the reaction of an organic diisocyanate, such as, for example, methylene-bis-(4-phenyl isocyanate) (MDI) or toluene diisocyanate (TDI) with an amine or glycolic chain. It is well-known, in fact, that the polyurethane synthesis can be effected with diamines, thus obtaining polyurethane-ureas, or with glycols, obtaining, in this latter case, polyurethane in the true sense.

Possible aliphatic diamines which can be used as chain extenders in the production of polyurethane-ureas, are ethylene diamine (EDA), 1,3-cyclohexanediamine (1,3-CHDA), 1,4 cyclohexanediamine (1,4-CHDA), isophoronediamine (IPDA), 1,3-propylenediamine (1,3-PDA), 2-methylpentamethylene diamine (MPDM), 1,2-propylene diamine (PDA), and blends thereof. Typical examples of aromatic diamines to be used as chain extenders are 3,3'-dichloro-4,4'-diaminodiphenyl methane, methylene-bis(4-phenyl amine) (MPA), 2,4-diamino-3,5-diethyl toluene, 2,4-diamino-3,5-di(methylthio)toluene. The above aliphatic and/or aromatic diamines can be added as such or developed in situ by reacting the corresponding isocyanate with water. The chain extension in the polyurethanes in the true sense can also be obtained with diols such as ethylene glycol and blends thereof. Finally, the chain extension can also be effected by means of dicarboxylic acids such as malonic, succinic and adipic acids.

The reactions used for preparing polyurethanes and polyurethane-ureas are normally effected in aprotic inert solvents, such as dimethyl acetamide (DMAc), dimethyl formamide (DMF), N-methyl pyrrolidone (NMP). The above preparations are well-known to technical experts in the field.

Polyurethane is used, in step (c) in the form of a solution in suitable aprotic inert solvents, preferably selected from dimethyl acetamide (DMAc), N,N-dimethyl formamide (DMF), N-methyl pyrrolidone (NMP), even more preferably N,N-dimethyl formamide. As an alternative, step (c) can be effected using an emulsion or an aqueous dispersion of polyurethane.

The process of the present invention allows a multilayer intermediate product to be produced, in which at least one of the layers has the function of representing the front view surface of the final product and at least one of the other layers has the function of mechanically reinforcing the composite material.

When the intermediate multilayer consists of more than two layers, the process can envisage one or more longitudinal cutting phases, running parallel to the surfaces, analogously to what is effected in the processes currently in use.

In all cases contemplated in the present invention, the non-woven layers can consist of microfibres with a different dyeability, organized so as to confer a "melange" type effect in the final suede-like leather.

A first advantage of the process of the present invention consists in the possibility of overcoming the limit so far consisting of using twisted yarns with a high number of twists, characteristic of the state of the art described above.

A second advantage consists in the elimination of the transportation phenomena of fibres from the supporting layer to the microfibrous surface, with a relevant improvement in the appearance of the end product.

The product obtained at the end of step (c) is subjected to the usual operations described in the prior art up to the formation of the end-product, i.e. steps 6-9 described above and illustrated with examples in the experimental part.

As far as the finished product is concerned, one of its distinctive characteristics with respect to the state of the art is represented by the fact that in each of the layers which form the product, there is not a substantial presence of fibres belonging to the other layers or deriving therefrom.

The final product is also characterized in that all its components are impregnated by a polyurethane binder, which has a structure which has no solution of continuity in the passage from one layer to another.

The insertion of the structure, either woven or knitted, according to the process of the present invention, allows an artificial leather of the suede-like type to be obtained, having mechanical properties such as to guarantee its use in a series of applications without any additional coupling.

A preferential, but not limitative, version of the overall process comprising the present invention is provided hereunder:
A) Spinning of a bicomponent fibre, in which at least one of the components is microfibrous.
B) Preparation of a semi-finished felt by means of a mechanical or water needling process, preferably mechanical. The intermediate felt has typical density values within the range of 0.150-0.200 g/cm³ and unit weights within the range of 580-630 g/m².
   In the production of felt, fibres with conventional deniers (natural, artificial or from synthesis) can be used, alone or in a mix with fibres obtained in item A.
C) Impregnation of the felt, according to what is explained in point 3 of the production method of the already known microfibrous non-woven fabrics (intermediate product called "SR").
D) Dissolution of the "sea" component of the bicomponent fibres present in the multilayer product, in accordance with what is explained in item 4 of the production method of the already known microfibrous non-woven fabrics (intermediate product called "D").
E) Longitudinal cutting of the intermediate product "D" parallel to the surfaces (intermediate product called "split D").
F) Production of a structure with 3 or more layers, by means of coupling with a suitable adhesive and technology, in which the two outer laminates are those obtained by cutting the intermediate "D".
   In a variant of the present method, it is possible to accomplish the combination of only one of the laminates "D" with the woven or knitted laminate, thus obtaining a two-layered structure only.
   In a second variant, it is possible to combine two laminates "D" with 2 or more textile laminates. In this case, the outer surfaces are formed by the intermediates "D".
G) The processing of the intermediate "D multilayer" obtained in item F, is normally carried out according to the production method of the already known microfibrous non-woven fabrics: see points 5-6-7-8-9.

As the only exception, there is the possibility of not effecting the cutting phase described in point 7, if the variant based on the construction of a structure with two layers only, is used.

It should be pointed out that, if a product uniformly dyed on both surfaces is to be obtained, the chemical nature of the fibres forming the various layers to be cohesioned, must be suitably selected. The following examples are provided for a better understanding of the present invention.

### EXAMPLES

The table shows the key of the abbreviations used in the examples for the identification of the raw materials.

| ABBREVIATION | RAW MATERIAL |
|---|---|
| PET | Polyethylene terephthalate |
| PS | Polystyrene |
| PVA | Polyvinyl alcohol |
| PHC | Polyhexamethylenecarbonate glycol |
| PNA | Polyneopentyladipate glycol |
| MDI | 4-4' Diphenylmethane diisocyanate |
| DBA | Dibutyl amine |

### EXAMPLE 1 (3-LAYER from split "D" + knitted velvet, cohesioned by calendering + D-PU)

A staple bicomponent fibre is prepared consisting of PET microfibres (0.14-0.17 dtex corresponding to 0.13-0.15 deniers) in a PS sea, having the following characteristics:
1. Deniers: 4.2 dtex (3.8 den)
2. Length: 51 mm
3. Curlings: about 4-5/cm.

In particular, the fibre consists of 57 parts by weight of PET and 43 parts by weight of

PS. The fibre, when observed in section, reveals the presence of 16 PET microfibres englobed in the PS sea.

A felt is prepared with the bicomponent fibre, by means of mechanical needling, having densities ranging from 0.150 to 0.200 g/cm³ and Unit Weights in the range of 580 to 630 g/m².

The needled felt is immersed in a water solution with 20% by weight of polyvinyl alcohol, and is then subjected to drying. After this treatment, the needled felt is then immersed in trichloro-ethylene until the complete dissolution of the polystyrene sea of the fibres. The non-woven fabric formed is subsequently dried and an intermediate product is obtained called "semifinished D".

The semifinished D product is then cut longitudinally to obtain two identical laminates.

The two laminates are superimposed, and a knitted fabric made of PET yarns, not cut, having the same thickness of 2.0 mm and without twisted yarns (produced by means of Raschel looms with fineness 22) is inserted between them to produce a 3-layered structure.

The velvet used as reinforcing element has a tenacity of 150 N/cm and an elongation-to-break of 55% in a longitudinal direction.

The three layers are cohesioned by means of a calender coupling process with a veil thermoplastic adhesive based on a co-polyamide; this adhesive is characterized by a melting range of 110-120°C. A "multilayer D semifinished product" is obtained.

A polyurethane elastomer is prepared separately, in the form a solution in DMF. In a first step (pre-polymerization) PHC and PNA are reacted at a temperature of 65°C, under stirring, both having a molecular weight of 2,000, with an MDI in a molar ratio isocyanate/diols of 2.9/1. Three hours after the beginning of the reaction, the pre-polymer thus obtained is cooled to a temperature of 45°C and diluted with DMF, with a water content of 0.03%, until a 25% solution of pre-polymer having a content of free NCO groups of 1.46%, is obtained.

DBA and water dissolved in DMF are then slowly added, over a period of 5 minutes, maintaining the temperature at 45°C, so as to have a polyurethane-polyurea with a molecular weight equal to 43,000. The reactor, after raising the temperature to 65°C, is maintained under stirring for a further 8 hours obtaining, at the end, a solution of polyurethane polyurea, stable with time, having a viscosity of 24,000 mPa*sec at 20°C. The elastomer solution thus prepared is then diluted with DMF, containing Tinuvin® 622 and Tinuvin® 326 to form a 14% by weight solution. The polymer obtained in solution, when coagulated in water, is capable of generating high porosity structures.

The "multilayer D semifinished product" prepared as described above, is immersed in the solution of the polyurethane elastomer, squeezed by passing it between a pair of rolls and subsequently immersed for 1 hour in a water bath maintained at 40°C. A coagulated multilayer product is obtained, which is passed into a water bath heated to 80°C to extract the residual solvent and polyvinyl alcohol. After drying, a composite material is obtained consisting of two microfibrous external layers and the velvet at the centre. This composite material is longitudinally cut at the centre into 2 laminates, each consisting of two layers (cut velvet + microfibrous layer). The laminates thus obtained are subjected to grinding, mainly on the microfibrous surface, to extract the microfibres and to form the nap: the result is a composite material having 2 layers, one of these is a microfibrous non-woven synthetic fabric called "crude", having an average thickness of 1.10 mm.

The composite material is then jet dyed according to the technological tradition used for already known suede-like leather.

The artificial leather thus obtained, has an appearance completely similar to that of already known high quality artificial leather, as a result of the absolute absence of fibres belonging to the reinforcing velvet in the microfibrous layer. This artificial leather however is different as a result of its high physico-mechanical properties (conferred to the composite material by the velvet used as reinforcement) which allow the covering of stuffed materials in the field of car-furnishing, without requiring any further coupling after the dyeing process. This specific characteristic also allows a composite material to be obtained having the two outer surfaces characterized by the same shade-colour. The composite material has a tenacity of 130 N/cm and an elongation-to-break of 50% in a longitudinal direction.

### EXAMPLE 2 (2-LAYER from Split "D" + "Colorado" cloth cohesioned by calendering + D-PU)

A staple bicomponent fibre is prepared, consisting of PET microfibres (0.14-0.17 dtex corresponding to 0.13-0.15 deniers) in a PS sea, having the following characteristics:
1. Deniers: 4.2 dtex (3.8 den)
2. Length: 51 mm
3. Curlings: about 4-5/cm.
   In particular, the fibre consists of 57 parts by weight of PET and 43 parts by weight of PS. The fibre, when observed in section, reveals the presence of 16 PET microfibres englobed in the PS sea.

A crude felt is prepared with the bicomponent fibre, subjected to needling to form a needled felt having a densities ranging from 0.150 to 0.200 g/cm³ and Unit Weights within the range of 580 to 630 g/m².

The needled felt is immersed in a water solution with 20% by weight of polyvinyl alcohol, and is then subjected to drying. After this treatment, the needled felt is then immersed in trichloro ethylene until the complete dissolution of the polystyrene sea of the fibres. The non-woven fabric formed is then dried and an intermediate product is obtained called "semifinished D".

The semifinished D product is then cut longitudinally to obtain two identical laminates.

One of the two laminates is superimposed on a knitted circular textile having a thickness of 0.35 mm, made of PET yarns, to form a two-layered structure.

The knitted fabric has a tenacity of 20 N/cm and an elongation of 60% under a load of 100N.

The two layers are cohesioned by means of a calendering coupling process with a veil thermoplastic adhesive based on a co-polyamide; this adhesive is characterized by a melting range of 110-120°C. A "multilayer D semifinished product" is obtained.

A polyurethane elastomer is prepared separately, in the form a solution in DMF. In a first step (pre-polymerization) PHC and PNA both having a molecular weight of 2,000, are reacted at a temperature of 65°C, under stirring, with MDI in a molar ratio isocyanate/diols of 2.9/1. Three hours after the beginning of the reaction, the pre-polymer thus obtained is cooled to a temperature of 45°C and diluted with DMF, with a water content of 0.03%, until a 25% solution of pre-polymer having a content of free NCO groups of 1.46%, is obtained.

DBA and water dissolved in DMF are then slowly added, over a period of 5 minutes, maintaining the temperature at 45°C, so as to have a polyurethane-polyurea having a molecular weight equal to 43,000. The reactor, after raising the temperature to 65°C, is maintained under stirring for a further 8 hours obtaining, at the end, a solution of polyurethane polyurea, stable with time, having a viscosity of 24,000 mPa*sec at 20°C. The elastomeric solution thus prepared is then diluted with DMF, containing Tinuvin® 622 and Tinuvin® 326 to form a 14% by weight solution. The polymer obtained in solution, when coagulated in water, is capable of generating high porosity structures.

The "multilayer D semifinished product" prepared as described above, is immersed in the solution of the polyurethane elastomer, squeezed by passing it between a pair of rolls and subsequently immersed for 1 hour in a water bath maintained at 40°C. A coagulated multilayer product is obtained which is passed into a water bath heated to 80°C to extract the residual solvent and polyvinyl alcohol. After drying, a composite material is obtained consisting of the microfibrous layer and knitted textile. The semi-finished product is subjected to grinding, mainly on the microfibrous surface, to extract the microfibres and to form the nap: the result is a composite material having 2 layers, one of these is a microfibrous non-woven synthetic fabric called "crude", having an average thickness of 1.10 mm.

The composite material is then jet dyed according to the technological tradition used for already known suede-like leather.

The artificial leather thus obtained, has an appearance completely similar to that of already known high quality artificial leather, as a result of the absolute absence of fibres belonging to the reinforcing knitted material in the microfibrous layer. This artificial leather however is different as a result of its high physico-mechanical properties (conferred to the composite material by the knitted material used as reinforcement) which allow the covering of stuffed materials in the field of car-furnishing, without requiring any further coupling after the dyeing process. This specific characteristic also allows a composite material to be produced having the two outer surfaces characterized by the same shade-colour. The composite material has a tenacity of 140 N/cm and an elongation-to-break of 60% in a longitudinal direction.

## Claims

1. A process for the preparation of a multilayer intermediate product impregnated with polyurethane, useful for preparing a soft synthetic leather with enhanced mechanical resistance comprising:
a) production of a microfibrous non-woven intermediate product consisting of microfibres of one or more polymers selected from polyethylene terephthalate, polytrimethylene terephthalate, polybutylene terephthalate, polyacrylonitrile, polyamide;
b) preparation, by coupling effected by means of adhesives, of an intermediate multilayer product comprising at least one layer of the above non-woven microfibrous intermediate product and at least one layer of a reinforcing textile product;
**characterized in that**:
c) said reinforcing textile product is an orthogonal woven or knitted textile made of synthetic, and/or artificial, and/or natural fibres, and that the multilayer intermediate product produced in step (b) is impregnated with one or more polyurethane solutions, thus obtaining a multilayer intermediate product impregnated with polyurethane.

2. The process according to claim 1, wherein the non-woven microfibrous intermediate product is prepared with microfibres of polyethylene terephthalate (PET).

3. The process according to claim 1, wherein the reinforcing textile product is selected from two-dimensional and three-dimensional orthogonal woven or knitted textile.

4. The process according to claim 1, wherein the adhesives used in (b) are selected from thermoplastic adhesives having a melting range of 60 to 150 deg. C.

5. The process according to claim 4, wherein the thermoplastic adhesives are based on co-polyester or co-polyamide and have a melting range of 80 to 120 dcg. C.

6. The process according to claim 1, wherein the coupling of step (b) is effected according to the hot-melt technology.

7. The process according to claim 1, wherein the coupling of step (b) is effected by means of calendering lamination.

8. The process according to claim 1, wherein the multilayer intermediate product prepared in step (b) comprises two outer layers of non-woven material and an inner layer of reinforcing textile product.

9. The process according to claim 1, wherein the multilayer intermediate product prepared in step (b) comprises a non-woven layer and a layer consisting of a reinforcing textile.

10. The process according to claim 1, wherein the impregnation of step (c) is effected by means of immersion of the multilayer intermediate product in a solution of one or more polyurethanes and subsequent coagulation.

11. The process according to claim 1, wherein the impregnation of step (c) is effected by means of immersion of the multilayer intermediate product in an emulsion or water dispersion of polyurethane and subsequent coagulation.

12. The process according to claim 1, wherein the non-woven microfibrous intermediate prepared in step (a) consists of fibres with a count lower than 1.1 dtex (1 den).

13. The process according to claim 1, wherein, the non-woven microfibrous intermediate prepared in step (a) consists of fibres having a different dyeability, organized so as to provide a "melange" effect.

14. Soft synthetic leather having enhanced mechanical resistance obtained starting from the multilayer intermediate product according to claim 1, **characterised by** the absence, in each layer, of fibres characteristic of the other layers or coming from the same.

15. The soft synthetic leather having enhanced mechanical resistance according to claim 14, **characterized in that** the two outer surfaces consist of one or more non-woven components.

16. The soft synthetic leather having enhanced mechanical resistance according to claim 15, wherein the chemical and physical structure of the polyurethane binder does not show a solution of continuity between the layers forming the composite material.

## Patentansprüche

1. Verfahren zum Herstellen eines mit Polyurethan imprägnierten Mehrschichtzwischenprodukts, das nützlich ist, um ein weiches Kunstleder mit verbesserter mechanischer Festigkeit herzustellen, umfassend:
a) Fertigung eines Mikrofaservlieszwischenprodukts, bestehend aus Mikrofasern eines oder mehrerer Polymere, ausgewählt aus Polyethylenterephtalat, Polytrimethylenterephtalat, Polybutylenterephtalat, Polyacrylonitril und Polyamid;
b) Herstellung eines Mehrschichtzwischenprodukts durch Kaschieren mittels Klebstoffen, umfassend mindestens eine Schicht des genannten Mikrofaservlieszwischenprodukts und mindestens eine Schicht eines verstärkenden Textilprodukts;
**dadurch gekennzeichnet, dass**:
c) es sich beim verstärkenden Textilprodukt um einen orthogonal gewebten oder gestrickten Textilstoff, bestehend aus Synthetik- und/oder Kunst- und/oder Naturfasern, handelt und dadurch, dass das in Schritt (b) gefertigte Mehrschichtzwischenprodukt mit einer oder mehreren Polyurethanlösungen imprägniert ist, wodurch ein Mehrschichtzwischenprodukt entsteht, das mit Polyurethan imprägniert ist.

2. Verfahren nach Anspruch 1, wobei das Mikrofaservlieszwischenprodukt mit Mikrofasern aus Polyethylenterephthalat (PET) hergestellt wird.

3. Verfahren nach Anspruch 1, wobei das verstärkende Textilprodukt aus einem zweidimensionalen und dreidimensionalen orthogonal gewebten oder gestrickten Textilstoff besteht.

4. Verfahren nach Anspruch 1, wobei die in (b) verwendeten Klebstoffe aus thermoplastischen Klebstoffen ausgewählt werden, die einen Schmelzbereich von 60 bis 150 Grad Celsius besitzen.

5. Verfahren nach Anspruch 4, wobei die thermoplastischen Klebstoffe auf Copolyester oder Copolyamid basieren und einen Schmelzbereich von 80 bis 120 Grad Celsius besitzen.

6. Verfahren nach Anspruch 1, wobei das Kaschieren aus Schritt (b) gemäß der Heißschmelztechnik durchgeführt wird.

7. Verfahren nach Anspruch 1, wobei das Kaschieren aus Schritt (b) durch die Beschichtung mittels Kalanderwerk erfolgt.

8. Verfahren nach Anspruch 1, wobei das in Schritt (b) hergestellte Mehrschichtzwischenprodukt zwei äußere Schichten aus Vliesmaterial und eine innere Schicht aus verstärkendem Textilprodukt umfasst.

9. Verfahren nach Anspruch 1, wobei das in Schritt (b) hergestellte Mehrschichtzwischenprodukt eine Vliesschicht und eine Schicht, bestehend aus einem verstärkenden Textilstoff, umfasst.

10. Verfahren nach Anspruch 1, wobei das Imprägnieren aus Schritt (c) durch das Eintauchen des Mehrschichtzwischenprodukts in eine Lösung aus einem oder mehreren Polyurethanen und der nachfolgenden Koagulation erfolgt.

11. Verfahren nach Anspruch 1, wobei das Imprägnieren aus Schritt (c) durch das Eintauchen des Mehrschichtzwischenprodukts in eine Emulsion oder Wasserdispersion aus Polyurethan und die nachfolgende Koagulation erfolgt.

12. Verfahren nach Anspruch 1, wobei das in Schritt (a) hergestellte Mikrofaservlieszwischenprodukt aus Fasern mit einem Titer von weniger als 1,1 dtex (1 den) besteht.

13. Verfahren nach Anspruch 1, wobei das in Schritt (a) hergestellte Mikrofaservlieszwischenprodukt aus Fasern mit einer unterschiedlichen Färbbarkeit besteht, so organisiert, dass ein "Melangeeffekt" erzielt wird.

14. Weiches Kunstleder, aufweisend eine verbesserte mechanische Festigkeit, erhalten ausgehend vom Mehrschichtzwischenprodukt nach Anspruch 1, **dadurch gekennzeichnet, dass** jede Schicht keine Fasern aufweist, die charakteristisch für die anderen Schichten sind oder aus diesen kommen.

15. Weiches Kunstleder, aufweisend eine verbesserte mechanische Festigkeit nach Anspruch 14, **dadurch gekennzeichnet, dass** die zwei äußeren Oberflächen aus einer oder mehreren Vlieskomponenten bestehen.

16. Weiches Kunstleder, aufweisend eine verbesserte mechanische Festigkeit nach Anspruch 15, wobei die chemische und physikalische Struktur des Polyurethanbinders zwischen den Schichten durchgehend ist und das Verbundmaterial bildet.

## Revendications

1. Procédé destiné à la préparation d'un produit intermédiaire multicouche imprégné de polyuréthane, utile pour la préparation d'un cuir velours synthétique ayant une résistance mécanique accrue comprenant :
a) la réalisation d'un produit microfibre intermédiaire non-tissé constitué de microfibres d'un ou plusieurs polymères à choisir parmi le polytéréphtalate d'éthylène, le polytéréphtalate de triméthylène, le polytéréphtalate de butylène, le polyacrylonitrile et le polyamide ;
b) préparation, par assemblage effectué au moyen de colles, d'un produit intermédiaire multicouche comprenant au moins une couche d'un produit microfibre intermédiaire non-tissé susmentionné et au moins une couche d'un produit textile renforçant ;
**caractérisé en ce que** :
c) ledit produit textile renforçant est un textile tissé orthogonal ou tricoté constitué de fibres synthétiques, artificielles et/ou naturelles, et **en ce que** le produit intermédiaire multicouche fabriqué à l'étape (b) est imprégné d'une ou plusieurs solutions de polyuréthane, obtenant ainsi un produit intermédiaire multicouche imprégné de polyuréthane.

2. Procédé selon la revendication 1, dans lequel le produit microfibre intermédiaire non-tissé est préparé avec des microfibres de polytéréphtalate d'éthylène (PET),

3. Procédé selon la revendication 1, dans lequel le produit textile renforçant est choisi à partir d'un tissé orthogonal à deux ou à trois dimensions ou d'un textile tricoté.

4. Procédé selon la revendication 1, dans lequel les colles utilisées en (b) sont choisies à partir de colles thermoplastiques ayant un intervalle de fusion compris entre 60 et 150°C.

5. Procédé selon la revendication 4, dans lequel les colles thermoplastiques sont à base de copolyester ou de copolyamide et ayant un intervalle de fusion compris entre 80 et 120°C.

6. Procédé selon la revendication 1, dans lequel l'assemblage de l'étape (b) est effectué par le biais de la technologie de thermocollage.

7. Procédé selon la revendication 1, dans lequel l'assemblage de l'étape (b) est effectué par calandrage.

8. Procédé selon la revendication 1, dans lequel le produit intermédiaire multicouche préparé à l'étape (b) comprend deux couches supérieures d'une matière non-tissée et une couche inférieure d'un produit textile renforçant.

9. Procédé selon la revendication 1, dans lequel le produit intermédiaire multicouche préparé à l'étape (b) comprend une couche non-tissée et une couche constituée d'un textile renforçant.

10. Procédé selon la revendication 1, dans lequel l'imprégnation de l'étape (c) est effectuée par immersion du produit intermédiaire multicouche dans une solution d'un ou plusieurs polyuréthanes et de coagulation successive.

11. Procédé selon la revendication 1, dans lequel l'imprégnation de l'étape (c) est effectuée par immersion du produit intermédiaire multicouche dans une émulsion ou une dispersion aqueuse de polyuréthane et de coagulation successive.

12. Procédé selon la revendication 1, dans lequel l'intermédiaire microfibre non-tissé préparé à l'étape (a) est constitué de fibres pesant moins de 1,1 décitex (1 denier).

13. Procédé selon la revendication 1, dans lequel l'intermédiaire microfibre non-tissé préparé à l'étape (a) est constitué de fibres ayant une aptitude à être teinte, différente, organisées de telle sorte à aboutir à un effet de « mélange ».

14. Cuir velours synthétique ayant une résistance mécanique accrue obtenu à partir du produit intermédiaire multicouche selon la revendication 1, **caractérisé par** l'absence, dans chaque couche, de fibres caractéristiques des autres couches ou qui proviennent de celles-ci.

15. Cuir velours synthétique ayant une résistance mécanique accrue selon la revendication 14, **caractérisé en ce que** les deux surfaces supérieures sont constituées d'un ou plusieurs composants non-tissés.

16. Cuir velours synthétique ayant une résistance mécanique accrue selon la revendication 15, dans lequel la structure physique et chimique du liant en polyuréthane n'indique pas une solution de continuité entre les couches formant le matériau composite.
